# EUROPEAN PATENT APPLICATION

(11) **EP 2 281 709 A1**
(43) Date of publication of application: **09.02.2011**
(21) Application number: 08158146.4
(22) Date of filing: 12.06.2008
(51) Int. Cl.: B60K 28/06

(54) **System for preventing operation by impaired operator and method for the same**

(30) Priority: 13.06.2007 JP 2007155800
(71) Applicant: KABUSHIKI KAISHA TOYOTA JIDOSHOKKI, Kariya-shi, Aichi-ken (JP)
(72) Inventor: Yanagisawa, Hideo, Kariya-shi Aichi 448-8671 (JP)
(74) Representative: TBK-Patent

(57) **Abstract**

A system (10) for preventing operation of an object by an impaired operator is provided. The object has a drive source (19) and is operated by an operator (H). The system includes an operator replacement recognition device (14,15), an operation prevention device (11), and a controller (20). The operator replacement recognition device (14,15) recognizes operator replacement. The operation prevention device (11) prevents operation by the impaired operator (H). The controller (20) is communicable with the operator replacement recognition device (14,15) and the operation prevention device (11). The controller (20) instructs to perform the operation prevention device (11) when the operator replacement is recognized by the operator replacement recognition device (14,15) during operating the drive source.

## Description

### BACKGROUND OF THE INVENTION

The present invention relates to a system for preventing operation by an impaired operator and a method for the same. Specifically, the system has an operator replacement recognition device for recognizing operator replacement after start of a drive source of an object to be operated, and a method for confirming operating ability of the operator after the replacement.

In operating an object such as a vehicle, when an operator lacks driving ability as an operator, generally an adequate running of the object may not be accomplished. In case the object is a vehicle, drunk driving or driving without a license are cited as an example of lack of driving ability, and such an operator is cited as an example of an impaired operator. Such driving is a violation of traffic rules, and an adequate running is not accomplished.

As an example, a drunk driving prevention system is disclosed in Japanese Patent Application Publication No. 2004-318411. In such a system, a vehicle includes a driver identification device for identifying the driver and an alcohol detection device for detecting breath alcohol concentration of the driver. The vehicle is communicable with a control system through a communication means. The control system includes a database. The database stores information, such as registration information of drivers and criterion for determining whether a driver is impaired or not. The control system further includes a determining means and a safe running protecting means. The determining means determines whether driving is allowable or not. The safe running protecting means performs automatically a procedure for prohibiting the driver from continuing driving in case the determining means determines driving is not allowable.

According to this kind of drunk driving prevention system, a driver's condition after getting in the vehicle with respect to alcohol consumption is detected by the driver identification device and the alcohol detection device. The detected result is notified to the control system, and the control system determines whether driving is allowable or not. When the control system determines driving is not allowable, continuation of driving is set to be prohibited by the safe running protecting means. When a drunk driving prevention system is a type which detects the driver's condition with respect to alcohol consumption only at the point of the engine start, the system may not prohibit drunk driving in case the driver at the engine start is replaced with another driver after the engine start. That is, in case where the first driver who has not consumed alcohol starts the engine to start driving, and then, without stopping the engine, the first driver is replaced with the second driver who has consumed alcohol, the drunk driving prevention system may not prevent drunk driving. In the drunk driving prevention system of the above reference, alcohol in the ambient air in the vehicle compartment is detected by a vehicle interior alcohol concentration detection device which is independently provided from the alcohol detection device. Therefore, when the driver is replaced without stopping the vehicle engine, the alcohol concentration detection device detects alcohol in the ambient air in the vehicle compartment. When the control system determines that alcohol is detected and that the driver is not allowable to drive, the control system notifies and warns the driver by an alarm device.

As another related art, Japanese Patent Application Publication No. 2002-225649 discloses a device including a license plate with an abnormal state notification mechanism. The device notifies outside an abnormal condition appropriately when an abnormal condition such as drunk driving is detected in the vehicle compartment. The license plate is provided with a notification unit which includes a alarm lamp for notifying outside the abnormal condition in the vehicle. The notification unit is connected to a signal output unit connected to an abnormal condition detection unit. In the abnormal condition detection unit, when a seated driver detection device detects that the driver is on the driver's seat while an alcohol detection sensor detects alcohol, a determination unit determines that the condition is abnormal due to drunk driving. Then an abnormal signal is outputted and the notification unit generates a notification signal. The alarm lamp of the notification unit is lighted or blinked to notify outside the abnormal condition in the vehicle.

According to the drunk driving prevention method by the drunk driving prevention system in the first reference No. 2004-318411, the alcohol concentration in the ambient air inside the vehicle compartment is continuously detected by the vehicle interior alcohol concentration detection device. Therefore the alcohol detection device is always required to be in the operational state.

According to the second reference No. 2002-225649, it is only disclosed that the abnormal signal is outputted in case both the driver's sitting and the driver's alcohol consumption are detected by the seated driver detection device and the alcohol detection sensor. As described above, the device of the second reference does not prevent drunk driving when a first driver is replaced without stopping the engine with a second driver who has consumed alcohol.

The present invention is directed to a system for preventing operation by an impaired operator and a method for the same. Specifically, the system prevents operation by an impaired operator even when an operator at start of a drive source of an object is replaced after the start of the drive source with another operator who is impaired.

### SUMMARY OF THE INVENTION

In accordance with an aspect of the present invention, a system for preventing operation of an object by an impaired operator is provided. The object has a drive source and is operated by an operator. The system includes an operator replacement recognition device, an operation prevention device, and a controller. The operator replacement recognition device recognizes operator replacement. The operation prevention device prevents operation by the impaired operator. The controller is communicable with the operator replacement recognition device and the operation prevention device. The controller instructs to perform the operation prevention device when the operator replacement is recognized by the operator replacement recognition device during operating the drive source.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a block diagram of a drunk driving prevention system according to a first preferred embodiment of the present invention;
FIG. 2 is a flow chart illustrating steps by the drunk driving prevention system according to the first preferred embodiment;
FIG. 3 is a flow chart illustrating further steps by the drunk driving prevention system according to the first preferred embodiment;
FIG. 4 is a block diagram of a drunk driving prevention system according to a second preferred embodiment of the present invention;
FIG. 5 is a flow chart illustrating steps by a drunk driving prevention system according to the second preferred embodiment;
FIG. 6 is a flow chart illustrating further steps by the drunk driving prevention system according to the second preferred embodiment;
FIG. 7 is a block diagram of a drunk driving prevention system according to a third preferred embodiment of the present invention;
FIG. 8 is a flow chart illustrating steps by the drunk driving prevention system according to the third preferred embodiment.

### DETAILED DESCRIPTION OF THE PREFERRED EMBODIMENTS

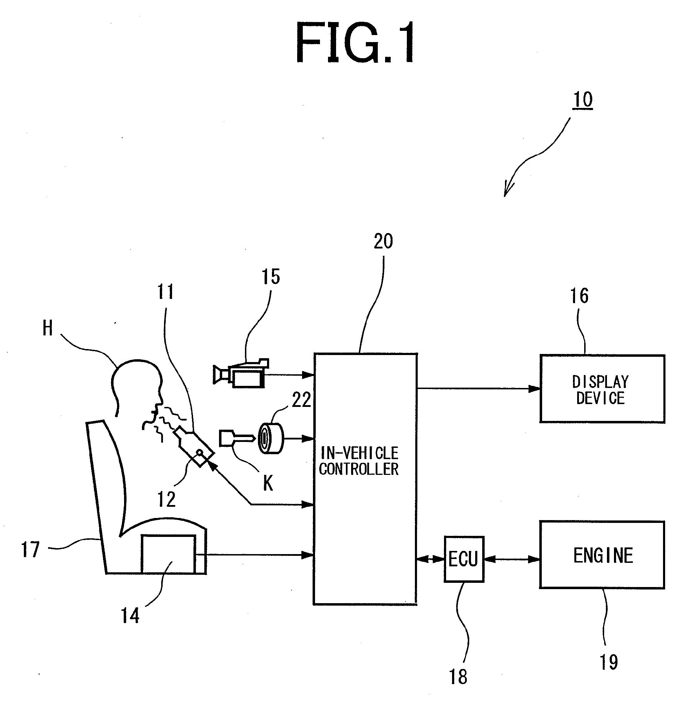

The following will describe a first preferred embodiment of a system for preventing operation by an impaired operator with reference to FIGS 1 through 3. Specifically the system is exemplified by a drunk driving prevention system for preventing driving a vehicle by an impaired operator due to alcohol in the first preferred embodiment. It is noted that "an impaired operator" represents an operator whose driving ability is deemed to be impaired due to alcohol consumption.

A drunk driving prevention system 10 shown in FIG. 1 is installed in a vehicle (not shown) provided with an engine 19. The vehicle serves as an object to be operated, and the engine 19 serves as a drive source of the object in this embodiment. The drunk driving prevention system 10 includes a driver replacement detection device, an alcohol detection mechanism 11, a display device 16, an engine unit controller (hereinafter referred to as ECU) 18, and an in-vehicle controller 20. The driver replacement detection device detects replacement of a driver H who is driving the vehicle. The alcohol detection mechanism 11 detects breath alcohol concentration of the driver H. The display device 16 displays various kinds of information. The ECU 18 controls the engine 19. The in-vehicle controller 20 controls equipments and devices in the vehicle.

The alcohol detection mechanism 11 detects alcohol on the exhaled breath of the driver H. The alcohol detection mechanism 11 serves as an alcohol detection device which constitutes an operation prevention device for preventing operation by an impaired operator in the system for preventing operation by an impaired operator. The operation prevention device performs a preventive motion for preventing operation of the object by an impaired operator.

The alcohol detection mechanism 11 includes an alcohol sensor 12 for detecting alcohol concentration of the exhaled breath of the driver H. The alcohol sensor 12 is connected to the in-vehicle controller 20 so as to send a detection signal to the in-vehicle controller 20 when alcohol of the driver H's breath is detected. A known alcohol sensor may be utilized as the alcohol sensor 12. Alternatively, the alcohol sensor 12 may be an alcohol sensor that sends a detection signal when the degree of the alcohol concentration exceeds a threshold value, or that sends a detection signal corresponding to the alcohol concentration. The threshold value may be decided according to motor vehicle operation ordinances or criminal laws, and it may be recognized that alcohol is not detected when the detected alcohol concentration does not exceed the threshold value. In the alcohol detection mechanism 11 of the first preferred embodiment, the alcohol sensor 12 is provided in a duct (not shown) for introducing the breath to the alcohol sensor 12. That is to reduce the influence of detecting alcohol in the ambient air in the vehicle compartment as small as possible by introducing the driver H's breath into the duct positively, even when alcohol is included in the ambient air in the vehicle compartment (in case only a drunken fellow passenger exhales alcohol on his breath).

The driver replacement detection device detects replacement of the driver H. Specifically, in the system for preventing operation by an impaired operator, the driver replacement detection device of this embodiment serves as an operator replacement recognition device for recognizing the replacement of the operator. The driver replacement detection device of this embodiment includes a seat sensor 14 and an in-vehicle camera 15. The seat sensor 14 serves as a contact detection device for detecting whether the driver H contacts a driver's seat 17 physically. The in-vehicle camera 15 serves as an operator recognition device for confirming identity of the driver H in conjunction with the seat sensor 14.

At the contact condition of the operator, the in-vehicle controller 20 confirms the presence of an operator by the contact detection device, based on the signal indicating the presence of the operator. At the non-contact condition, the in-vehicle controller 20 confirms the absence of an operator. When the driver H sits on the driver's seat 17 and the driver's weight is received as load which exceeds a predetermined value, the seat sensor 14 sends ON signal which indicates that a non-contacting state is changed into a contacting state. When the driver H leaves the driver's seat 17, the load is released. Then, the seat sensor 14 sends OFF signal which indicates that the contacting state is changed into the non-contacting state.

The operator recognition device confirms the identity of operator before and after the replacement, in case there is a possibility that the operator may be replaced. The in-vehicle camera 15 which captures an image of the driver H at the seat 17. The in-vehicle camera 15 serves as the operator recognition device of this embodiment in conjunction with the seat sensor 14. The in-vehicle camera 15 is controlled by the in-vehicle controller 20 so as to capture an image of the driver H when the in-vehicle controller 20 receives an ON signal from the seat sensor 14. The in-vehicle camera 15 includes an image capturing unit (not shown) and a processing unit (not shown). The image capturing unit captures an image of an object. The processing unit confirms the identity of the object to be captured in comparison with each captured data. The result of the confirmation of the identity of the driver H is sent to the in-vehicle controller 20. Thus, the seat sensor 14 and the in-vehicle camera 15 constitute the driver replacement detection device.

The drunk driving prevention system 10 includes the display device 16 with a phonetic function. The display device 16 indicates various kinds of information, and also serves as a notification device to notify an abnormal condition in the vehicle. The display device 16 is operated under the control of the in-vehicle controller 20. When the alcohol detection mechanism 11 detects the alcohol concentration of the driver H's breath, and the in-vehicle controller 20 recognizes that the driver H is impaired, the display device 16 displays a warning under the control of the in-vehicle controller 20, and issues an audio alarm.

In this embodiment, the display device 16 serves as the notification device. The warning may be performed by blinking of light or warning beep, and the medium and means for warning may not be specifically limited as long as it is capable of notifying the driver H and the passengers in the vehicle that the driver H is impaired. The display device 16 as the notification device together with the alcohol detection mechanism 11 constitutes the operation prevention device for preventing operation by an impaired operator in the system for preventing operation by an impaired operator.

The ECU 18 (Engine Control Unit) is a computer exclusively for engine control. The ECU 18 determines amount and time of fuel ejection of the engine 19 based on the information from sensors for the engine 19, and performs idle-speed control and adjustment of air-fuel ratio, and ignition timing control. A known ECU may be utilized as the ECU 18. In this embodiment, the ECU 18 is controlled by the in-vehicle controller 20. Alternatively, the function of the ECU 18 may be included in the in-vehicle controller 20 so that the ECU 18 is integrated with the in-vehicle controller 20.

The in-vehicle controller 20 is a superordinate computer which is communicable with the alcohol detection mechanism 11, the driver replacement detection device, the display device 16, and the ECU 18. Specifically, the in-vehicle controller 20 serves as a controller which is communicable with the operator replacement recognition device and the operation prevention device for preventing operation by an impaired operator in the system for preventing operation by an impaired operator. The in-vehicle controller 20 includes a processing unit, a memory unit, and a communication unit, which are not shown in the drawings. The processing unit performs various kinds of data processing and program processing. The memory unit stores data and programs. The communication unit communicates with equipments.

Specifically, the memory unit of the in-vehicle controller 20 stores a program for executing a series of processing, such as confirming driver replacement, detecting alcohol of driver H's breath after replacement, and issuing warning in response to alcohol detection. The program is stored in a computer-readable state. In the memory unit, the image data of the driver H captured by the in-vehicle camera 15 is stored, and is capable of being utilized if required. Further, the in-vehicle controller 20 is capable of receiving a signal from a key unit 22 of an ignition key so as to receive a signal at the engine start with a key K. The signal of the key unit 22 by turning the key K may be sent to the ECU 18 or other equipments for the engine start.

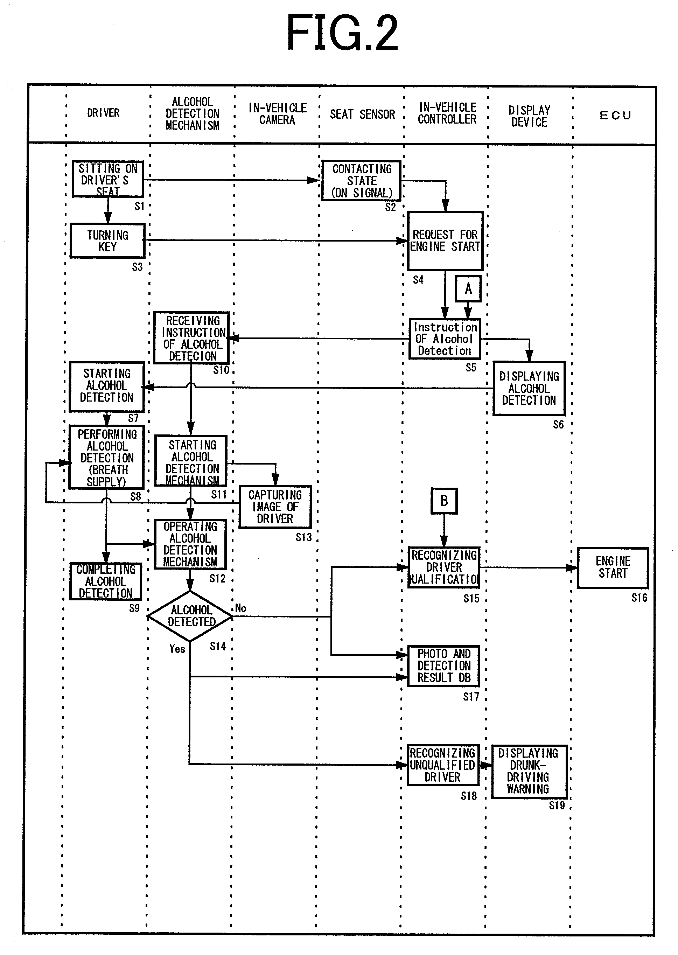

The following will describe steps for preventing drunk driving by the drunk driving prevention system 10. FIG 2 is a flow chart indicating a series of processing (S1 through S19) in the drunk driving prevention system 10. The uppermost row laterally indicates constituent elements of the drunk driving prevention system 10.

In explaining the method for preventing the drunk driving, steps from a stopped state of the vehicle engine 19 to the start of the engine 19 will be firstly described. When the driver H sits on the driver's seat 17, the seat sensor 14 sends an ON signal to the in-vehicle controller 20. When the driver H inserts the key K into the key unit 22 and turns the key K in the direction to start the engine 19, an engine start signal is sent from the key unit 22 to the in-vehicle controller 20. At this moment, the in-vehicle controller 20 recognizes the presence of the driver H and the request for the engine start. When the in-vehicle controller 20 recognizes the presence of the driver H and the request for the engine start, the in-vehicle controller 20 instructs the alcohol detection mechanism 11 to detect alcohol and also the display device 16 to indicate that alcohol detection is performed (shown as S1 through S6 in FIG. 2).

Then, the alcohol detection mechanism 11 which receives an instruction for alcohol detection is activated to be in an alcohol detectable state. When the alcohol detection mechanism 11 is in the alcohol detectable state, the in-vehicle camera 15 captures an image of the driver H and obtains the image data of the driver H (shown as S13 in FIG. 2). The obtained image data is capable of being utilized for redetection when the driver replacement is confirmed. The obtained data is stored in the memory unit on the in-vehicle controller 20.

The display device 16 indicates that the alcohol detection is performed. At the time when the alcohol detection mechanism 11 is in an alcohol detectable state, the driver H is requested to supply the breath into the duct of the alcohol detection mechanism 11 within a predetermined time according to the indication of the display device 16. When the breath is not supplied to the duct of the alcohol detection mechanism 11 within the predetermined time, the engine starting operation by the key K is reset, and the request for the engine start in the in-vehicle controller 20 is released.

When the driver H supplies the breath into the duct of the alcohol detection mechanism 11 within the predetermined time while alcohol is not included in the breath, the alcohol sensor 12 does not react. In this case, the detected result by the alcohol detection mechanism 11 is "alcohol un-detected". When the signal indicating "alcohol un-detected" is sent to the in-vehicle controller 20, the in-vehicle controller 20 determines that the driver H on the seat 17 has driving ability. Then, the in-vehicle controller 20 sends the instruction signal for engine start, and the ECU 18 starts the engine 19 (shown as S7 through S16 in FIG. 2).

When the alcohol sensor 12 detects alcohol of the driver H's breath, the detected result by the alcohol detection mechanism 11 is "alcohol detected". When the signal indicating "alcohol detected" is sent to the in-vehicle controller 20, the in-vehicle controller 20 determines that the driver H on the seat 17 is impaired and sends the instruction signal for warning drunk driving to the display device 16. Based on the instruction for warning drunk driving, the display device 16 displays a warning against drunk driving on the screen so that the driver H and the passengers recognize the warning, and issues an audio alarm (shown as S18, S19 in FIG. 2)

Next will describe a case in which the driver H leaves the driver's seat 17 after the start of the engine 19, and sits on the seat 17 thereafter. In this case, the driver H who sits on the seat 17 thereafter may be a different operator. In case of the driver replacement, it may be assumed that, for example, the driver H who has started the engine 19 is not impaired due to alcohol, and the driver H who sits on the seat 17 after leaving is impaired. When the driver H leaves the seat 17 and sits on the seat 17 after the engine start, it is desirable to recognize whether the driver H is replaced and to perform alcohol detection of the driver H after the driver replacement. The driver H before leaving the seat 17 is hereinafter denoted as a first driver, and the driver H who sits on the seat 17 after leaving the seat 17 is denoted as a second driver.

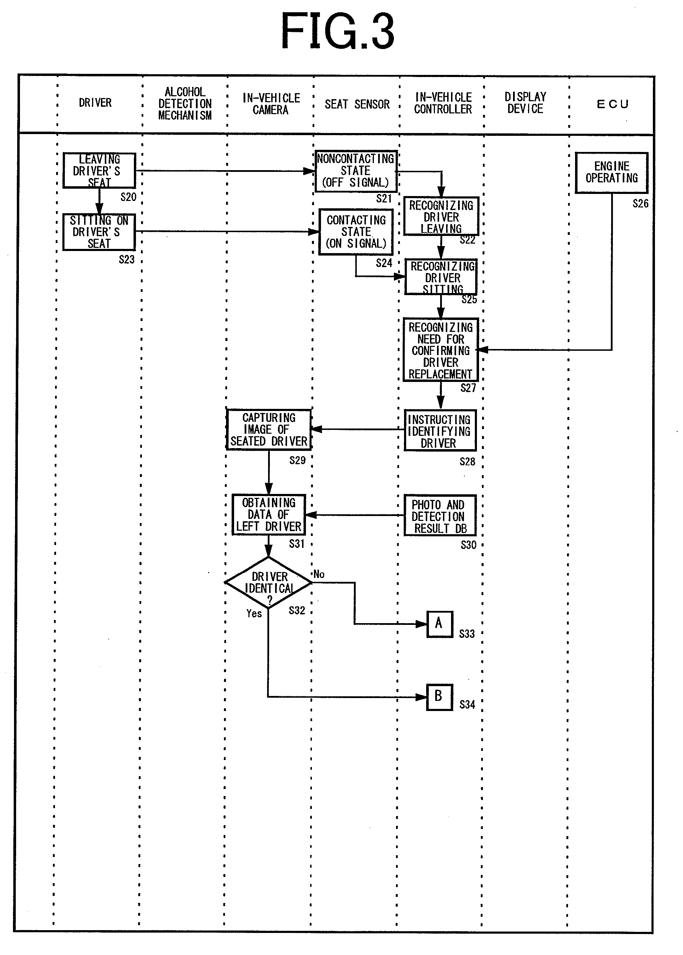

As shown in FIG. 3, when the driver H leaves the driver's seat 17 at the engine operating state (for example, idling state), the seat sensor 14 is released from the load of the driver H. Therefore, the contacting state is changed into the non-contacting state, and the OFF signal is sent from the seat sensor 14 to the in-vehicle controller 20. The in-vehicle controller 20 receives the OFF signal, and recognizes that the driver H leaves the seat 17 (shown as S20 through S22 in FIG. 3). Thereafter, when the driver H sits on the driver's seat 17, the ON signal of the seat sensor 14 is sent to the in-vehicle controller 20. In the in-vehicle controller 20, it is recognized through the communication with the ECU 18 that the engine 19 is operating. By receiving the OFF signal of the seat sensor 14 during operating the engine and the ON signal after receiving the OFF signal, the in-vehicle controller 20 recognizes that there may possibly exist a need for alcohol detection of the second driver H.

In the following steps, the identity of the driver H before leaving the seat 17 (first driver) and the driver H after leaving (second driver) is confirmed, and then the need for alcohol detection is determined. When the second driver H is not the same operator as the first driver H, alcohol detection is performed. When the second driver H is the same operator as the first driver H, alcohol detection is not performed.

After the in-vehicle controller 20 recognizes that there may possibly exist a need for alcohol detection of the second driver H, the in-vehicle controller 20 instructs the in-vehicle camera 15 to capture an image of the second driver H. The in-vehicle camera 15 obtains the image data by capturing the second driver H. The in-vehicle camera 15 fetches from the in-vehicle controller 20 the image data of the first driver H before leaving the seat 17, which is captured at the engine start. After image manipulation, the in-vehicle camera 15 compares the image data with the image data which is captured when the second driver H sits on the seat 17 (as shown S27 through S32 in FIG. 3).

The in-vehicle camera 15 confirms the identity of the driver H after the image manipulation by comparing the image data before leaving the seat 17 and the image data after the second driver H sits on the seat 17. The comparison processing of the image data is processed by a program for confirming the identity of the driver H by comparing the features of the first driver H and the second driver H. When the in-vehicle camera 15 confirms the identity of the driver H by the comparison processing of the image data, the step proceeds to "B" in FIG. 3, and the vehicle is allowable to run again without a warning.

On the other hand, when the in-vehicle camera 15 does not confirm the identity of the driver H, the step proceeds to "A" in FIG. 3, and the alcohol detection is performed by the alcohol detection mechanism 11 as shown in FIG.2. In this case, the alcohol detection is the same as the steps performed before the engine start. When alcohol is not detected as the result of alcohol detection, the vehicle is allowable to run again without a warning. When alcohol is detected, the display device 16 displays the warning on the screen for the driver H and the passengers. The display device 16 also issues an audio alarm. Thereby the driver H and the passengers recognize that driving is not adequate due to alcohol. Thus, the operation by an impaired driver H is prevented by the motion of the alcohol detection mechanism 11 and the warning by the display device 16.

The drunk driving prevention system 10 according to the first preferred embodiment has the following advantageous effects.
(1) According to the drunk driving prevention system 10, when an adequate driver H is replaced with an impaired driver H during operating the engine 19, the driver replacement is recognized by the seat sensor 14 and the in-vehicle camera 15 as the driver replacement detection device. Then the alcohol detection mechanism 11 performs alcohol detection, and the display device 16 displays a warning on the screen, and the like. Thereby the operation by the impaired driver H after the replacement is prevented. When the driver H is not replaced during operating the engine 19, the display device 16 does not display a warning.
(2) By detecting the physical contact with the driver H, the possibility of the driver replacement is recognized. Then, the in-vehicle camera 15 captures the images of the driver H before and after the replacement. By comparing the both image data, the identity of the driver H before and after the replacement can be confirmed.
(3) In the state where the engine 19 is operated, the alcohol detection is performed only when the driver replacement is recognized. Therefore, when the driver H is not replaced, the drunk driving prevention system 10 is not substantially performed. For example, an energy-saving drunk driving prevention system with low load can be accomplished.
(4) The alcohol detection mechanism 11 detects the alcohol of the driver H in such a way that the breath of the driver H is supplied. Even when alcohol is included in the ambient air in the vehicle compartment, for example, the alcohol detection of the driver H is accurately performed.
(5) When the driver replacement is uncertain, the in-vehicle camera 15 confirms the driver replacement. Therefore, impaired driving by an impaired driver after driver replacement is hardly performed immediately after the driver replacement. Further, when the driver replacement is recognized by the in-vehicle camera 15, the alcohol detection by the alcohol detection mechanism 11 is requested, thereby an impaired driving is further hardly performed.

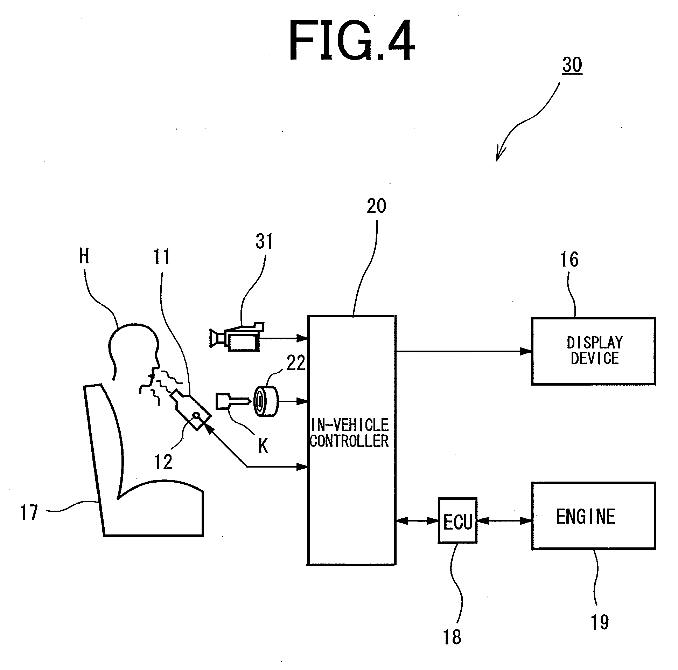

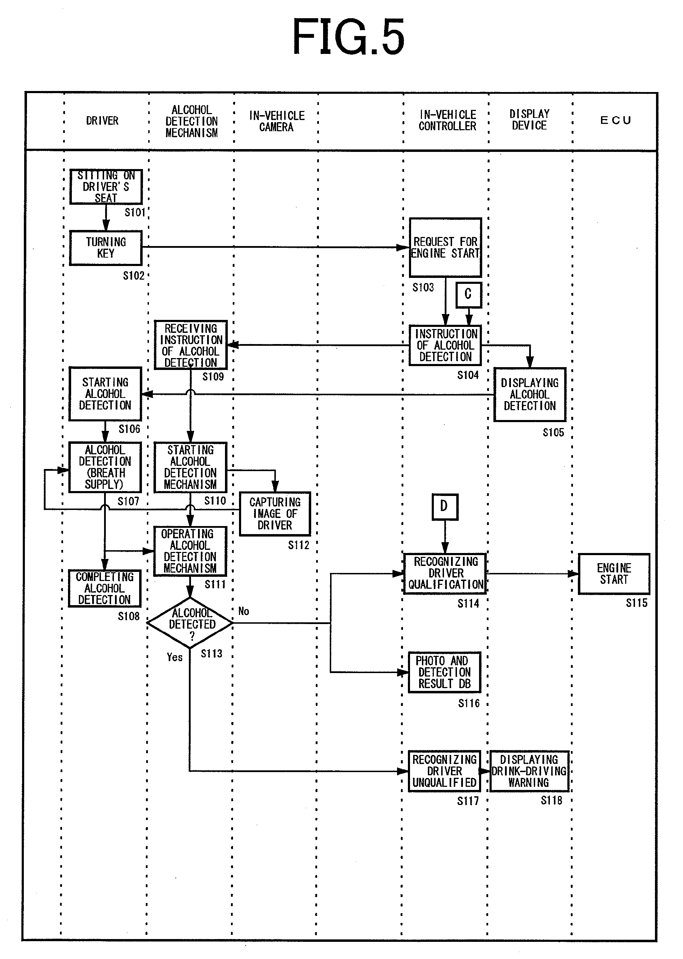

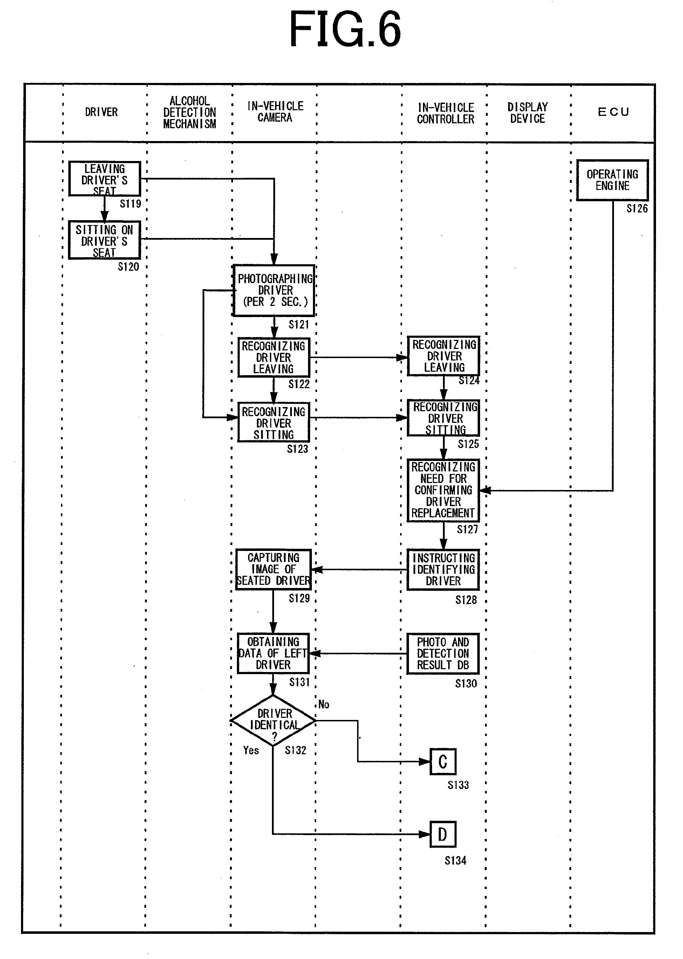

The following will describe a system for preventing operation by an impaired operator according to a second preferred embodiment. Similar to the first embodiment, the system for preventing operation by an impaired operator according to the second embodiment is applied to a drunk driving prevention system for preventing drunk driving. In the following second embodiment, the same reference numerals and symbols as used in the description of the first embodiment are used and the description of the same parts and elements will be omitted or simplified. FIG. 4 shows a block diagram of a drunk driving prevention system 30 without a seat sensor according to the second embodiment. FIGS. 5 and 6 show flow charts explaining method of drunk driving prevention by the drunk driving prevention system according to the second embodiment.

As shown in FIG. 4, the drunk driving prevention system 30 includes an alcohol detection mechanism 11, a driver replacement detection device, a notification device, an ECU 18, and an in-vehicle controller 20. The alcohol detection mechanism 11 detects alcohol concentration included in the exhaled breath of the driver H driving the vehicle. The driver replacement detection device detects replacement of the driver H. The notification device notifies that the driver H is impaired. The ECU 18 controls the engine 19. The in-vehicle controller 20 is a control device communicable with the alcohol detection mechanism 11, the driver replacement detection device, the notification device, and the ECU 18. The structures of the alcohol detection mechanism 11, the display device 16, the ECU 18, and the in-vehicle controller 20 are substantially the same as those of the drunk driving prevention system 10 according to the first embodiment.

The driver replacement detection device in this embodiment is an image capturing device for obtaining an image data of the driver H by photographing. Specifically the driver replacement detection device is an in-vehicle camera 31. The in-vehicle camera 31 has plural functions. The in-vehicle camera 31 serves as a camera for obtaining an image data of the driver H on the seat 17. The in-vehicle camera 31 also has a function for confirming the identity of the driver H by performing comparison processing of the image data of the plurality of the drivers H. Further, the in-vehicle camera 31 has a function for recognizing that driver H sits on the seat 17 and leaves from the seat 17.

The following will describe the method for preventing drunk driving by the drunk driving prevention system 30 of this embodiment.

Firstly, the method for preventing drunk driving will be described with the steps from the stopped state of the engine 19 to the start of the engine 19 by the driver H (S101 through S118 in FIG 5). As shown in FIG 5, when the driver H sits on the seat 17 and inserts the key K in the key unit 22 in the direction for starting the engine 19, the signal for instructing engine start is sent from the key unit 22 to the in-vehicle controller 20. At this time, the in-vehicle controller 20 recognizes the presence of the driver H and also the existence of the request for engine start. The in-vehicle controller 20 instructs the alcohol detection mechanism 11 to perform alcohol detection, and the display device 16 to display that the alcohol detection is performed.

The alcohol detection by the alcohol detection mechanism 11 is performed with the same steps as the first embodiment, and the explanation is omitted. The in-vehicle camera 31 obtains the image data of the driver H by photographing the driver H when the alcohol detection mechanism 11 is in an operable state. The obtained image data is utilized for re-detection in case where the driver replacement is recognized.

When alcohol is not detected by the alcohol detection mechanism 11, the result is an "alcohol undetected" state. The in-vehicle controller 20 recognizes that the driver H is not impaired due to alcohol consumption, and sends the instruction for engine start to the ECU 18, and the ECU 18 starts the engine 19. When alcohol is detected, the in-vehicle controller 20 receives the signal indicating "alcohol detected". The in-vehicle controller 20 recognizes that the driver H on the seat 17 is impaired, and sends the instruction for warning drunk driving to the display device 16. Based on the instruction, the display device 16 displays the warning on the screen and issues an audio alarm, so that the driver H and the passengers recognize.

The following will describe the steps in case the driver H is replaced. FIG. 6 shows the flow chart illustrating a series of steps for preventing drunk driving (S119 through S134) when the driver H is replaced during the operation of the engine 19. In the state where the detected result before the engine start is "alcohol undetected" to allow the engine start and the engine 19 is driven, the in-vehicle camera 31 captures an image of the driver H every predetermined time (for example, one image per two to three seconds). For example, when the first driver H leaves the seat 17 while the engine 19 is driven, the in-vehicle camera 31 captures an image in which the driver H is absent. The in-vehicle camera 31 recognizes the absence of the driver H by the image data in which the driver H is absent. In this case, when the in-vehicle camera 31 obtains an image data of the second driver H who sits on the seat 17 next time, the step proceeds to the further step for comparing the image data with the image data of the first driver H before leaving the seat 17.

When the second driver H sits on the driver's seat 17 after the first driver H leaves the seat 17, the in-vehicle camera 31 obtains the image data of the second driver H, and compares the obtained image data with the image data of the first driver H. When the in-vehicle camera 31 compares the image data and recognizes that the image data of the first driver H is the same as that of the second driver H, the result of the comparison indicating "driver identical" is sent to the in-vehicle controller 20. Then the step proceeds to "D" in FIG. 6. In this case, the vehicle is allowable to run again without receiving a warning.

When the in-vehicle camera 31 recognizes that the image data of the first driver H before leaving the seat 17 is not identical with that of the second driver H, the signal indicating "driver not identical" is sent to the in-vehicle controller 20. In this case, the step proceeds to "C" in FIG. 6. Based on the result "driver not identical", the in-vehicle controller 20 recognizes that alcohol detection is required for the second driver H, and instructs the alcohol detection mechanism 11 to perform alcohol detection. The alcohol detection at this time executes the same steps as those performed before the engine start as shown in FIG. 5. When alcohol is not detected as a result of the alcohol detection, the vehicle is allowable to run again without a warning. When alcohol is detected as a result of the alcohol detection, the display device 16 displays a warning on the screen for warning drunk driving such that the driver H and the passengers recognize, and also issues an audio alarm. Thereby the driver H and the passengers recognize the driving impaired due to alcohol.

According to the drunk driving prevention system 30 of the second preferred embodiment, the similar effects as paragraphs (3) and (4) of the first preferred embodiment are obtained. Further, when the adequate first driver H is replaced with the impaired second driver H during the engine 19 is driven, the driver replacement is recognized by the in-vehicle camera 31 as the driver replacement detection device. Thereby the drunk driving prevention system 30 prevents impaired driving by a driver H after driver replacement such that alcohol detection mechanism 11 performs alcohol detection, and that the display device 16 displays a warning on the screen. Since the in-vehicle camera 31 substantially constitutes the driver replacement detection device, the driver replacement after the engine start can be recognized only by the in-vehicle camera 31.

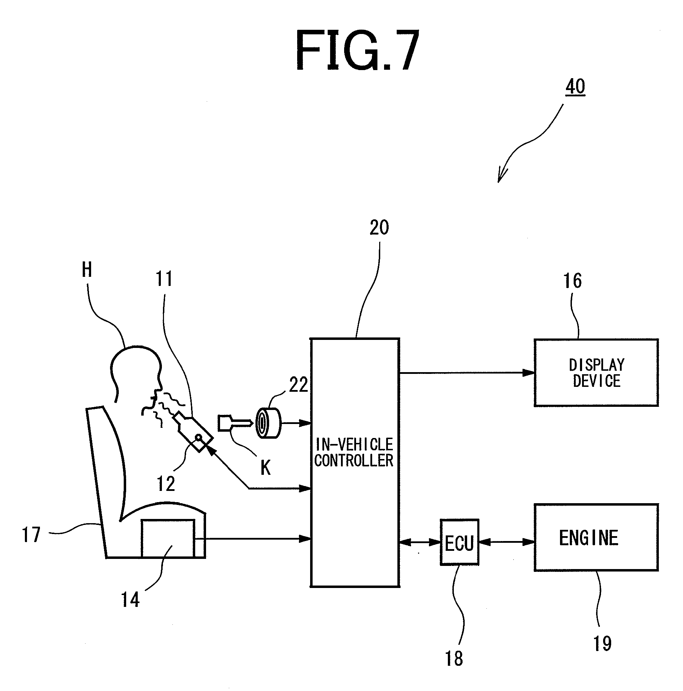

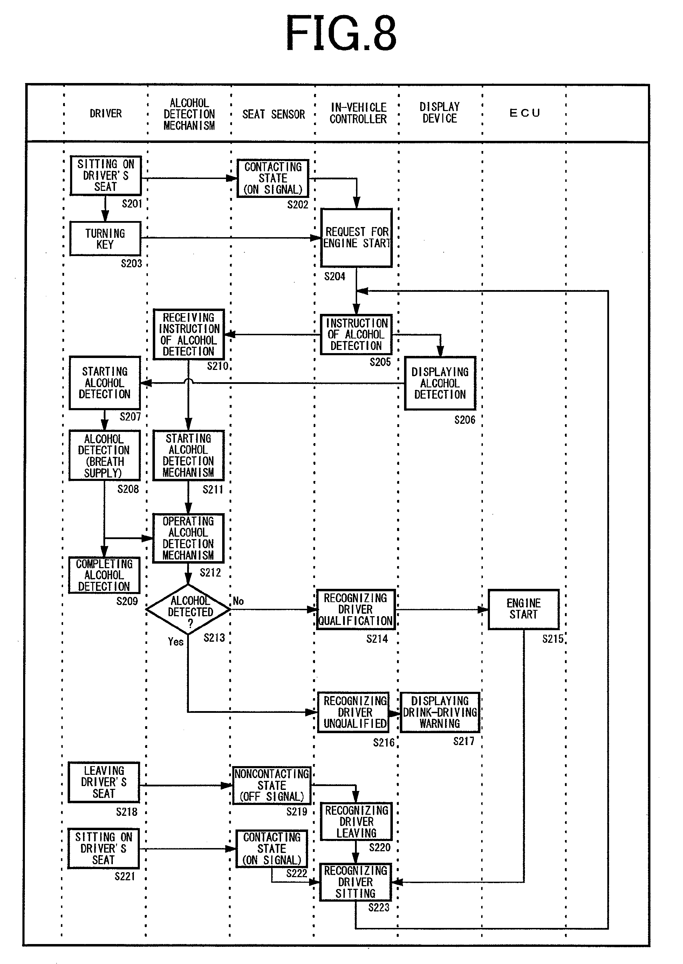

The following will describe a system for preventing operation by an impaired operator according to a third preferred embodiment. Similar to the first and second embodiments, the system for preventing operation by an impaired operator according to the third embodiment is applied to a drunk driving prevention system for preventing drunk driving. In the following third embodiment, the same reference numerals and symbols as used in the description of the first embodiment are used and the description of the same parts and elements will be omitted or simplified. FIG. 7 shows a block diagram of a drunk driving prevention system 40 without an in-vehicle camera according to the third embodiment. FIGS. 8 shows a flow chart illustrating a series of steps (S201 through S223) of drunk driving prevention of the drunk driving prevention system 40 according to the third embodiment.

As shown in FIG. 7, the drunk driving prevention system 40 according to the third preferred embodiment includes the alcohol detection mechanism 11, the seat sensor 14 as the driver replacement detection device, the ECU 18, and the in-vehicle controller 20. The structures of the alcohol detection mechanism 11, the seat sensor 14, the display device 16, the ECU 18, and the in-vehicle controller 20 are basically the same as those of the drunk driving prevention system of the first embodiment.

The driver replacement detection device is used for detecting the replacement of the driver H. The driver replacement detection device includes a contact detection device for detecting the physical contact with the driver H. Specifically the contact detection device in this embodiment is formed with the seat sensor 14. The seat sensor 14 has the same function as that of the first embodiment and recognizes that the driver H sits on the seat 17 and that the driver H leaves the seat 17.

The following will describe the method for preventing the drunk driving by the drunk driving prevention system 40 of this embodiment.

Firstly, the steps from the stopped state of the engine 19 to the start of the engine 19 by the driver H will be explained. When the driver H of the vehicle sits on the seat 17 and inserts the key K into the key unit 22 to turn the key K in the engine starting direction, the signal for instructing the engine start is sent from the key unit 22 to the in-vehicle controller 20. At this time, the in-vehicle controller 20 recognizes the presence of the driver H and the request for the engine start. The in-vehicle controller 20 then instructs the alcohol detection mechanism 11 to perform alcohol detection, and the display device 16 to display that alcohol detection is performed.

The steps of alcohol detection by the alcohol detection mechanism 11 are the same as that of the first embodiment, and the explanation is omitted. When alcohol is not detected by the alcohol detection mechanism 11, the result is an "alcohol undetected" state, and it is recognized in the in-vehicle controller 20 that the driver H on the seat 17 has driving ability. Then the instruction signal for the engine start is sent to the ECU 18, and the ECU 18 starts the engine 19. When alcohol is detected, the in-vehicle controller 20 which receives the signal indicating "alcohol detected" recognizes that the driver H on the seat 17 is impaired, and sends the instruction signal for warning drunk driving to the display device 16. The display device 16 displays the warning on the screen such that the driver H and the passengers recognize, and also issues an audio alarm.

Next will explain the case in which the first driver H leaves the seat 17 after the engine start and the second driver H sits on the seat 17. In this case, the second driver H may be a different person from the first driver H, or the condition of the driver H may be changed from that at the engine start. For example, the first driver H at the engine start may not be impaired, and the second driver H after the driver replacement after the engine start may be impaired due to alcohol. Or, though the driver H may be identical, the first driver H who is not impaired at the engine start may leave the seat 17 and sit again on the seat 17 being impaired due to alcohol. In such case where the driver H leaves the seat 17 after the engine start and sits on the seat 17, it is desirable that alcohol detection after the driver replacement is performed on the assumption that the driver replacement exists.

As shown in FIG. 7, when the first driver H leaves the seat 17 in the state where the engine is operated (for example, an idling state), the seat sensor 14 is released from the load and the contacting state is changed into the non-contacting state. The OFF signal of the seat sensor 14 is sent to the in-vehicle controller 20. The in-vehicle controller 20 recognizes that the first driver H leaves the seat 17. When the second driver H sits on the seat 17, the seat sensor 14 sends the ON signal to the in-vehicle controller 20. It is recognized through the communication with the ECU 18 that the engine 19 is driven in the in-vehicle controller 20. By receiving the OFF signal of the seat sensor 14 during the engine 19 is driven, and the ON signal after receiving the OFF signal, the in-vehicle controller 20 recognizes that alcohol detection for the second driver H is possibly required (S218 through S223 in the FIG. 8).

In the following steps, it is determined that alcohol detection is required despite of the identity of the first driver H before leaving and the second driver H sitting after leaving. After the in-vehicle controller 20 recognizes that alcohol detection of the second driver H is possibly required, the alcohol detection is performed. At this time, the steps of alcohol detection are the same as those performed before the engine start. When alcohol is not detected as the result of the alcohol detection, the vehicle is allowable to run again without a warning. When alcohol is detected by the alcohol detection, the display device 16 displays a drunk driving warning on the screen such that the driver H and the passengers recognize, and also issues an audio alarm. Thereby the driver H and the passengers can recognize the driving impaired due to a drunk driving.

The drunk driving prevention system 40 according to the third preferred embodiment obtains the similar effects as the paragraphs (3) and (4) of the first embodiment. Further, the alcohol detection is surely performed on the assumption that the driver H is replaced by recognizing the OFF and ON signals of the seat sensor 14 after the engine start. Thereby the drunk driving is prevented, and the possibility of impaired driving by an impaired driver due to drunk driving is reduced further.

The present invention is not restricted to the above-described embodiments, and may be modified or embodied variously as follows within the scope of the invention.

In the first through the third embodiments, the operating ability of the driver H is determined by whether the driver H is impaired due to alcohol consumption or not. The object of the operating ability of the operator is not limited to alcohol. For example, the health condition of the operator, the license for operation may be the operating ability. In this case, the information of the operator is preferably registered as the data in advance.

In the first through the third embodiments, operation of an object by an operator corresponds to driving of a vehicle by a driver. The object to be operated may be any kinds of transporting means. For example, a crane as a traveling body may be applied. In this case, the operator replacement may be recognized by replacing an operation pendant.

In the first through the third embodiments, when alcohol is detected from the driver, a warning is displayed on the screen of the display device. Alternatively, when the in-vehicle controller recognizes the driver impaired, for example, the engine may be forcibly stopped. The procedure of the in-vehicle controller after recognizing a operator impaired is not limited as far as the procedure prevents the operation of the object by an impaired operator. In the above embodiments, the alcohol detection device and the display device exemplify the operation prevention device for preventing operation by an impaired operator. The means and devices for the operation prevention device may be selected in accordance with the motion to prevent the operation of the object.

The operation prevention device for preventing operation by an impaired operator corresponds to the alcohol sensor and the display device, but the operation prevention device may not be limited to the alcohol sensor and the display device. As the operation prevention device for preventing operation by an impaired operator, for example, a display system may be applied so as to display "drunk driving prohibited!" on the display device 16. A system for injecting gas containing an element which neutralizes alcohol in the driver's body may be applied so that the driver inhales gas and that alcohol in the driver's body is neutralized and detoxified, resulting in preventing drunk driving.

Therefore, the present examples and embodiments are to be considered as illustrative and not restrictive, and the invention is not to be limited to the details given herein but may be modified within the scope of the appended claims.

A system for preventing operation of an object by an impaired operator is provided. The object has a drive source and is operated by an operator. The system includes an operator replacement recognition device, an operation prevention device, and a controller. The operator replacement recognition device recognizes operator replacement. The operation prevention device prevents operation by the impaired operator. The controller is communicable with the operator replacement recognition device and the operation prevention device. The controller instructs to perform the operation prevention device when the operator replacement is recognized by the operator replacement recognition device during operating the drive source.

## Claims

1. A system (10, 30, 40) for preventing operation of an object by an impaired operator, the object has a drive source (19) and is operated by an operator (H), comprising:
an operator replacement recognition device (14, 15, 31) for recognizing operator replacement;
an operation prevention device (11, 12, 16) for preventing operation by the impaired operator; and
a controller (20) communicable with the operator replacement recognition device (14, 15, 31) and the operation prevention device (11, 12, 16), wherein the controller instructs to perform the operation prevention device (11, 12, 16) when the operator replacement is recognized by the operator replacement recognition device (14, 15, 31) during operating the drive source (19).

2. The system (10, 30) for preventing operation according to claim 1, wherein the operator replacement recognition device (15, 31) includes an image capturing device (15, 31) for obtaining an image data of the operator (H) by photographing.

3. The system (10, 40) for preventing operation according to claim 1, wherein the operator replacement recognition device (14) includes a contact detection device (14) for detecting physical contact with the operator (H).

4. The system (10, 40) for preventing operation according to claim 3, wherein the object is a vehicle and the contact detection device (14) is a seat sensor.

5. The system (10) for preventing operation according to claim 1, wherein the operator replacement recognition device (14) includes a contact detection device for detecting physical contact with the operator and an operator recognition device (15) for confirming the identity of the operator in conjunction to the contact detection device (14).

6. The system (10, 30, 40) for preventing operation according to any one of claims 1 through 5, wherein the operation prevention device includes an alcohol detection device (11, 12) for detecting alcohol of the operator's breath of after operator replacement.

7. The system (10, 30, 40) for preventing operation according to any one of claims 1 through 6, wherein the operation prevention device (16) includes a notification device for notifying that the operator is impaired.

8. The system (10, 30, 40) for preventing operation according to claim 7, wherein the notification device (16) includes a display device for displaying a warning on a screen.

9. The system (10, 30, 40) for preventing operation according to any one of claims 1 through 8, the object is a vehicle and the system is used for preventing drunk driving of the vehicle.

10. A method for preventing operation of an object by an impaired operator, the object has a drive source (19) and is operated by an operator (H), comprising the steps of:
detecting operator replacement during operating the drive source;
confirming impaired operating ability of the operator;
recognizing the operator impaired, based on the information of the impaired operating ability confirmation; and
performing motion for preventing the operation by the impaired operator.

11. The method for preventing operation according to claim 10, wherein the step of performing motion for preventing the operation includes a step of notifying that the operator (H) is impaired.

12. The method for preventing operation according to claim 10, wherein the step of confirming impaired operating ability of the operator includes a step of detecting alcohol of the operator (H).
